# EUROPÄISCHE PATENTSCHRIFT

(11) **EP 2 781 904 B1**
(45) Veröffentlichungstag und Bekanntmachung des Hinweises auf die Patenterteilung: **16.09.2015**
(21) Anmeldenummer: 14160470.2
(22) Anmeldetag: 18.03.2014
(51) Int. Cl.: G09B 9/042

(54) **Testvorrichtung zur Simulierung von Fahrsituationen**
Test device for simulating driving situations
Dispositif de test destiné à la simulation de conditions de conduite

(30) Priorität: 22.03.2013 DE 102013102981
(43) Veröffentlichungstag der Anmeldung: 24.09.2014
(73) Patentinhaber: Continental Safety Engineering International GmbH, 63755 Alzenau (DE)
(72) Erfinder: Vetter, Johannes, 63846 Laufach (DE); Zecha, Stephan, 63768 Hösbach (DE)
(74) Vertreter: Büchner, Jörg

(56) Entgegenhaltungen:
- WO-A1-2012/156484
- DE-A1-102007 035 474
- DE-A1-102008 025 539
- DE-A1-102011 017 146
- JP-A- 2008 039 686

## Beschreibung

Die Erfindung betrifft eine Vorrichtung zur Simulierung von Fahrsituationen, insbesondere kollisionsnaher und kollisionsbehafteter Fahrsituationen, zwischen einem Fahrzeug und einem Testobjekt.

In Fahrzeugen kommen vermehrt Fahrerassistenzsysteme zum Einsatz. Einige dieser Fahrerassistenzsysteme dienen dem Schutz von Fahrzeuginsassen sowie weiterer Verkehrsteilnehmer, beispielsweise Fußgänger, Radfahrer und anderer Fahrzeuge. Die Fahrerassistenzsysteme umfassen hierzu in der Regel elektronische Einrichtungen zur Umfelderfassung, um den Fahrer in bestimmten Fahrsituationen geeignet unterstützen zu können, beispielweise mittels Bremsunterstützung, bis hin zur Notbremsung, oder mittels Ausweichmanöver. Beispiele für Einrichtungen zur Umfelderfassung sind Kameras, Radar- und Lidar-Sensoren.

Zum Testen der oben genannten Fahrerassistenzsysteme, insbesondere solcher mit Einrichtungen zur Umfelderfassung, werden verschiedene Testvorrichtungen verwendet. Bei bekannten Testvorrichtungen werden unterschiedliche Testobjekte beispielsweise quer zum Fahrweg des Fahrzeugs bewegt, um das Überqueren einer Straße durch einen Fußgänger oder das Kreuzen des Fahrwegs durch ein anderes Fahrzeug zu simulieren. Zur Überprüfung und Auslegung, ob bzw. wann ein Fahrerassistenzsystem im Falle einer drohenden Kollision einen Eingriff in die Fahrdynamik unternimmt oder andere Schutzmaßnahmen aktiviert, ist es notwendig, dass das Testobjekt bis zu einem Kontakt mit dem Fahrzeug, was einer kollisionsbehaftete Fahrsituation entspricht, oder zumindest bis kurz vor einem Kontakt, was einer kollisionsnahen Fahrsituation entspricht, im Fahrweg des Fahrzeugs verbleibt.

Eine Testvorrichtung, insbesondere für ein Fußgängerschutzsystem in einem Fahrzeug, ist beispielsweise aus der DE 10 2008 025 539 A1 bekannt. Hierbei wird ein Testobjekt mit einem Schlitten verbunden, der entlang einer Traverse bewegt werden kann, die sich quer zum Fahrweg des Fahrzeugs erstreckt. Die Traverse ist dabei in einer solchen Höhe über den Fahrweg des Fahrzeugs gespannt, dass das Fahrzeug die Traverse unterfahren kann und das Testobjekt somit frei im Fahrweg hängt.

Eine weitere Testvorrichtung ist aus der DE 10 2008 051 233 A1 bekannt. Die dort beschriebene Testvorrichtung dient zum Testen mindestens einer Funktion mindestens eines Fahrerassistenzsystems in einem Fahrzeug, wobei das Fahrzeug auf einer Fahrbahn, mittels des eigenen Antriebs durch einen Fahrer geführt, auf Attrappen (Testobjekte) von im Straßenverkehrs auftretenden bewegten Objekten zubewegbar ist, und wobei die Attrappen mindestens mittels eines Schienensystems, eines Laufschlittens, eines Antriebsmotors und/oder einer elektronischen Steuereinheit reproduzierbar im Verhältnis zur Position des sich bewegenden Fahrzeugs zur selben Zeit an den selben Ort bewegbar sind.

Nachteilig bei den bekannten Testvorrichtungen ist, dass bei der Simulation kollisionsbehafteter Fahrsituationen häufig Beschädigungen an Testobjekt oder Fahrzeug zurückbleiben. Darüber hinaus sind die bekannten Testvorrichtungen bezüglich ihrer Einsatzmöglichkeiten sehr beschränkt. Meist handelt es sich um Testvorrichtungen, die fest auf einem Versuchsgelände installiert sind und mit denen daher nur wenige unterschiedliche Fahrsituationen simuliert werden können. Ein weiterer Nachteil ist, dass durch eine Ausgestaltung mit Testobjekten, die frei an einer Traverse oder einem Führungsseil hängen, bestimmte natürliche Bewegungsabläufe, z.B. aufgrund von Schwingungen, nicht simuliert werden können.

Eine weitere Testvorrichtung ist aus der DE 10 2007 035 474 A1 bekannt, bei welcher vorgesehen ist, dass das Dummy-Element vor einem bevorstehenden Zusammenstoß mit dem Fahrzeug aus dem Gefahrenbereich automatisch heraus bewegbar ist. Dazu wird neben einem Seilzugmechanismus auch eine Möglichkeit eines Verschwenkens nach oben bzw. seitlich erwähnt. Dadurch entfällt jedoch gerade die Möglichkeit, das Verhalten des Fahrerassistenzsystems bis in den Moment des Zusammenstoßes, also gerade auch köllisionsbehaftete Fahrsituationen zu testen. Eine weitere Testvorrichtung ist aus der JP 2008039686 bekannt.

Der Erfindung liegt demnach die Aufgabe zugrunde, eine Vorrichtung anzugeben, mit der verschiedene Fahrsituationen, insbesondere kollisionsnahe und kollisionsbehaftete Fahrsituationen zwischen einem Fahrzeug und einem Testobjekt, möglichst realitätsgetreu bzw. wirklichkeitsnah simuliert werden können, und wobei im Falle einer Kollision zwischen Fahrzeug und Testobjekt diese möglichst zerstörungsfrei erfolgt. Darüber soll die Vorrichtung vorzugsweise flexibel sein, bezüglich der simulierbaren Fahrsituationen sowie hinsichtlich der möglichen Einsatzorte.

Diese Aufgabe wird durch Testvorrichtung mit den Merkmalen nach Anspruch 1 gelöst. Vorteilhafte Ausgestaltungen und Weiterbildungen sind Gegenstand von Unteransprüchen, wobei auch Kombinationen und Weiterbildungen einzelner Merkmale miteinander denkbar sind.

Die erfindungsgemäße Testvorrichtung dient zur Simulierung von Fahrsituationen zwischen einem Fahrzeug und einem Testobjekt, insbesondere von kollisionsnahen und kollisionsbehafteten Fahrsituationen.

Als kollisionsbehaftete Fahrsituationen werden nachfolgend insbesondere solche Fahrsituationen bezeichnet, bei denen tatsächlich ein Kontakt, d.h. eine Kollision, zwischen Fahrzeug und Testobjekt erfolgt. Als kollisionsnahe Fahrsituationen werden nachfolgend insbesondere solche Fahrsituationen bezeichnet, bei denen es zu keinem Kontakt zwischen Fahrzeug und Testobjekt kommt. Die kollisionsnahen Fahrsituationen werden nachfolgend weiterhin auch als kollisionsfreie Fahrsituationen bezeichnet.

Mit der erfindungsgemäßen Testvorrichtung können beispielsweise Verkehrssituationen getestet werden, d.h. Fahrsituationen nachgestellt bzw. simuliert werden, bei denen ein Verkehrsteilnehmer, repräsentiert durch das Testobjekt, sich relativ zum Fahrweg des Fahrzeugs bewegt. Handelt es sich bei dem Verkehrsteilnehmer z.B. um einen Fußgänger, kann sich dieser beispielsweise zunächst längs zum Fahrweg des Fahrzeugs bewegen. Bei Erreichen eines Fußgängerüberwegs, z.B. eines Zebrastreifen oder eines Überwegs mit Verkehrsampel, kann der Fußgänger seine Blickrichtung und seine Bewegungsrichtung im Wesentlichen in Richtung quer zum Fahrweg des Fahrzeugs ändern. In diesem Fall kann beispielsweise ein Fahrerassistenzsystem getestet werden, ob es potenzielle Gefahren erkennt, die von dieser Fahrsituation ausgehen, insbesondere dass der Fußgänger oder Radfahrer im Begriff ist, die Straße zu überqueren. Im weiteren Verlauf kann getestet werden, wie ein Fahrerassistenzsystem reagiert, wenn sich der Verkehrsteilnehmer tatsächlich quer zum Fahrweg des Fahrzeugs bewegt und dadurch die Gefahr einer Kollision mit dem Fahrzeug besteht.

Das Fahrzeug kann dabei mit wenigstens einem Fahrerassistenzsystem ausgebildet sein, das zur Umsetzung wenigstens einer Fahrerassistenzfunktion dient. Bei der Fahrerassistenzfunktion handelt es sich dabei vorzugsweise um eine Funktion zur Vermeidung von Verkehrsunfällen und/oder zur Minimierung von Unfallfolgen.

Bei dem Testobjekt kann es sich insbesondere um eine zweidimensionale oder dreidimensionale Nachbildung eines beliebigen Verkehrsteilnehmers handeln, beispielsweise eines Fahrzeugs, Fahrradfahrers, Tieres und/oder eines Fußgängers. Das Testobjekt kann darüber hinaus mit einem oder mehreren Sensoren ausgestaltet sein, die beispielsweise die Belastung messen, die während der Simulierung einer Fahrsituation auf das Testobjekt einwirken, insbesondere im Falle einer Kollision mit dem Fahrzeug. Bei dem Testobjekt kann es sich insbesondere um einen sogenannten Dummy handeln, der aufgrund seiner inneren Mechanik verschiedene Haltungsposen annehmen kann. Der Dummy kann weiterhin aus einer dicken Schaumhülle und einem inneren Stabilisierungsskelett bestehen. Dadurch ist der Dummy sehr leicht und Kollisionen zwischen Dummy und Fahrzeug bleiben weitgehend schadensfrei für beide Kollisionspartner.

Bei der erfindungsgemäßen Testvorrichtung ist das Testobjekt mittels einer Aufhängung mit einem Laufschlitten verbunden, der entlang von Führungsschienen eines Schienensystems relativ zum Fahrweg und/oder zur Position des Fahrzeugs bewegbar ist. Die Führungsschienen des Schienensystems sind dabei vorzugsweise in einer solchen Höhe positioniert bzw. angeordnet, beispielsweise mittels einer Stützkonstruktion, so dass die Führungsschienen vom Fahrzeug unterfahrbar sind. Das ist insbesondere wichtig, um Fahrsituationen simulieren zu können, bei denen sich das Testobjekt quer zum Fahrweg des Fahrzeugs bewegt. Das Testobjekt ist weiterhin vorzugsweise derart mittels der Aufhängung mit dem Laufschlitten verbunden, dass das Testobjekt vom Fahrzeug anfahrbar ist. Das Testobjekt ist dabei insbesondere in einer solchen Höhe positioniert, dass eine Kollision zwischen Fahrzeug und Testobjekt möglich ist.

Erfindungsgemäß umfasst die Aufhängung, mittels der das Testobjekt mit dem Laufschlitten verbunden ist, zumindest ein Gelenk. Ansonsten, d.h. über das zumindest eine Gelenk hinaus, ist die Aufhängung, und damit die Verbindung zwischen Testobjekt und Laufschlitten, vorzugsweise steif ausgebildet. Hierzu kann die Aufhängung neben dem wenigstens einen Gelenk beispielsweise eine oder mehrere steife Verbindungstreben bzw. Verbindungsstäbe umfassen.

Das zumindest eine Gelenk ist erfindungsgemäß weiterhin derart ausgebildet, dass das Gelenk bei kollisionsfreien Fahrsituationen einen nicht ausgelenkten Zustand annimmt bzw. bis zu einer Kollision zwischen Fahrzeug und Testobjekt einen nicht ausgelenkten Zustand einbehält. Bei dem nicht ausgelenkten Zustand handelt es sich insbesondere um einen Ruhezustand des Gelenks, derart, dass das Testobjekt in einer anfahrbaren Position bzw. Höhe im Fahrweg des Fahrzeug bewegt werden kann, sowie insbesondere derart, dass das Testobjekt im Wesentlichen steif über das Gelenk mit dem Laufschlitten verbunden ist. Das Gelenk kann dabei beispielsweise derart ausgebildet sein, dass es bei einer kollisionsfreien Fahrsituation bzw. bis zu einer Kollision zwischen Fahrzeug und Testobjekt aufgrund der Gewichtskraft des Testobjekts, mittels eines Arretiermechanismus, mittels eines bestimmten internen Widerstands und/oder mittels einer definierten Federkraft im nicht ausgelenkten Zustand bzw. im Ruhezustand verbleibt und eine im Wesentlichen steife Verbindung zwischen Laufschlitten und Testobjekt schafft. Das zumindest eine Gelenk ist erfindungsgemäß weiterhin derart ausgebildet, dass das Gelenk bei kollisionsbehafteten Fahrsituationen einen ausgelenkten Zustand annimmt, d.h. bei einer Kollision bzw. einem Kontakt zwischen Fahrzeug und Testobjekt von dem nicht ausgelenkten Zustand in einen ausgelenkten Zustand wechselt, insbesondere bei Überschreiten einer bestimmten Krafteinwirkung vom Fahrzeug auf das Testobjekt. Bei dem ausgelenkten Zustand handelt es sich insbesondere um eine solche Auslenkung des Gelenks, so dass das Testobjekt bei einer Kollision mit dem Fahrzeug derart wegklappt bzw. wegkippt, dass es aus der Kollisionszone bewegt wird, insbesondere nach oben.

Ein wesentlicher Vorteil der erfindungsgemäßen Testvorrichtung besteht in der Art der Aufhängung des Testobjektes. Die Aufhängung erlaubt ein passives Wegklappen bzw. Wegkippen des Testobjektes, wenn dieses durch das Fahrzeug angefahren wird. Dadurch wird das Testobjekt bei einer kollisionsbehafteten Fahrsituation aus der Kollisionszone bewegt und der Gefahr von Beschädigung von Testobjekt und Fahrzeug werden minimiert. Gleichzeitig erlaubt die Aufhängung aufgrund deren Steifigkeit während kollisionsfreien Fahrsituationen, d.h. bis zu einer Kollision zwischen Fahrzeug und Testobjekt, dass Beschleunigung des Laufschlittens, die auf das Testobjekt übertragen werden, zu keinen oder nur geringen Schwingungen des Testobjektes führen. Dadurch können Fahrsituationen mit besonders wirklichkeitsnahem Bewegungsverhalten des Testobjektes nachgestellt werden.

Gemäß der erfindungsgemäßen Testvorrichtung ist das zumindest eine Gelenk mit einem Vorspannmechanismus ausgebildet, der bei einem Kontakt des Testobjekts mit dem Fahrzeug bzw. allgemein bei einer bestimmten Krafteinwirkung von außen auf das Testobjekt auslöst und das Gelenk aus dem nicht ausgelenkten Zustand in einen definierten ausgelenkten Zustand überführt. Bei dem definierten ausgelenkten Zustand kann es sich beispielsweise um eine Auslenkung mit einem Winkel von mindestens 45° und/oder annähernd 90° (gegenüber dem nicht ausgelenkten Zustand) handeln, so dass das Testobjekt bei einer Kollision mit dem Fahrzeug automatisch mittels einer Kippbewegung aus der Kollisionszone bewegt bzw. gezogen wird. Ein wesentlicher Vorteil dieser Ausgestaltung der erfindungsgemäßen Testvorrichtung besteht zu einen darin, dass das Testobjekt bereits bei geringen Belastungen vollständig aus der Kollisionszone bewegt werden kann, was die insgesamt auf das Fahrzeug und das Testobjekt einwirkenden Kollisionsbelastungen reduziert. Zum anderen kann die Bewegung, d.h. das Wegkippen des Testobjekts aus der Kollisionszone, sehr schnell umgesetzt werden.

Gemäß der erfindungsgemäßen Testvorrichtung ist das Gelenk mit einem Arretiermechanismus ausgebildet, welcher das Gelenk im ausgelenkten Zustand hält. Der Arretiermechanismus ist dabei insbesondere derart ausgebildet, dass das Gelenk, wenn aufgrund einer kollisionsbehafteten Fahrsituation ein Wechsel vom nicht ausgelenkten in den ausgelenkten Zustand erfolgt, im maximal erreichten oder in einem definierten ausgelenkten Zustand arretiert wird. Insbesondere dann, wenn das Gelenk mit einem Vorspannmechanismus ausgebildet ist, welcher eine automatische Auslenkung bei Kollision bewirkt, beispielweise mit einem Winkel von mindestens 45° und/oder annähernd 90°, kann das Gelenk mittels des Arretiermechanismus in diesem auslenkten Zustand gehalten werden. Ein wesentlicher Vorteil dieser Ausgestaltung der erfindungsgemäßen Testvorrichtung besteht darin, dass das Testobjekt nach einer Kollision außerhalb der Kollisionszone gehalten wird, insbesondere in der Luft, so dass ein Zweitkontakt mit dem Fahrzeug vermieden wird.

Das Gelenk der Aufhängung kann auch mit einem Dämpfungsmechanismus ausgebildet sein, insbesondere alternativ zum vorangehend beschriebenen Arretiermechanismus. Der Dämpfungsmechanismus ist dabei bevorzugt derart ausgebildet, dass dieser das Gelenk, nach Wechsel vom nicht ausgelenkten Zustand in den ausgelenkten Zustand, beispielsweise mittels Vorspannmechanismus, länger im ausgelenkten Zustand hält, wobei das Testobjekt mittels des Dämpfungsmechanismus mit einer verlangsamten (gedämpften) Bewegung vom ausgelenkten Zustand in den nicht ausgelenkten Zustand überführt bzw. zurückgeführt wird. Weiterhin kann der Dämpfungsmechanismus derart ausgebildet sein, dass das Gelenk, und damit das Testobjekt, nach einer gewissen Zeit und/oder bei Erreichen eines bestimmten Auslenkungswinkels, vorzugsweise während der gedämpften Zurückführung vom ausgelenkten in den nicht ausgelenkten Zustand, in den nicht ausgelenkten Zustand zurückfällt. Weiterhin kann das Gelenk, wenn es in den ausgelenkten Zustand zurückfällt, in dem ausgelenkten Zustand arretiert werden.

Gemäß einer vorteilhaften Ausgestaltung der erfindungsgemäßen Testvorrichtung ist die Aufhängung weiterhin drehbar ausgebildet, so dass das Testobjekt um eine vertikale Achse drehbar mit dem Laufschlitten verbunden ist. Hierzu kann die Aufhängung mit einem zusätzlichen Drehgelenk, beispielsweise im Bereich des Laufschlittens oder in der Nähe des Testobjektes, ausgebildet sein. Bei der vertikalen Achse handelt es sich insbesondere um die Hochachse, d.h. um die eigene vertikale Achse des Testobjektes senkrecht zum Untergrund. Ein wesentlicher Vorteil dieser Ausgestaltung der erfindungsgemäßen Testvorrichtung besteht darin, dass das Testobjekt relativ zum Fahrweg bzw. relativ zur Position des Fahrzeugs gedreht und somit aus verschiedenen Richtungen bzw. von verschiedenen Seiten angefahren werden kann.

Gemäß einer weiteren vorteilhaften Ausgestaltung der erfindungsgemäßen Testvorrichtung umfasst diese einen stationären Motor mit Umschlingungsgetriebe, mittels dem der Laufschlitten über eine Seilzugvorrichtung entlang der Führungsschienen des Schienensystems bewegbar ist. Der Motor ist dabei vorzugsweise an der tragenden Struktur des Schienensystems angeordnet, beispielsweise an einem Stützpfeiler. Die Seilzugvorrichtung umfasst dabei insbesondere mehrere Umlenkrollen, welche an der tragenden Struktur und entlang des Schienensystems der Testvorrichtung angeordnet sind, zur Umlenkung des Zugseiles. Der Antrieb des Laufschlittens über einen stationären Motor mit Seilzugvorrichtung erlaubt einen sehr leichten Aufbau des Laufschlittens bei gleichzeitig hohen erreichbaren Beschleunigungen der Vorrichtung.

Alternativ kann ein stationärer Motor mit einem Getriebe eine Zahnriemenvorrichtung und diese den Laufschlitten antreiben.

Gemäß einer besonderen Ausgestaltung der erfindungsgemäßen Testvorrichtung ist die Seilzugvorrichtung mit einem Inkrementalgeber ausgebildet. Dieser dient insbesondere zur Ermittlung der Position des Testobjektes entlang der Führungsschienen. Die Position kann dabei zur Auswertung und zur Reproduktion von simulierten Fahrsituationen in einem Speicher abgelegt werden. Weiterhin kann die mittels des Inkrementalgebers erfasste Position zusätzlich in Verbindung mit einem GPS Stempel in dem Speicher hinterlegt werden.

Gemäß einer besonderen Ausgestaltung der erfindungsgemäßen Testvorrichtung umfasst das Schienensystem kurvenförmige Führungsschienen, entlang derer der Laufschlitten bewegbar ist. Durch die Anordnung von Kurvenelementen in die Schienenführung kann das Testobjekt neben geradlinigen Bewegungen auch Kurvenbewegungen durchlaufen. Hierdurch ist es beispielsweise möglich einen typischen Abbiegevorgang eines Fußgängers zu simulieren, der sich zunächst im Wesentlichen parallel zum Fahrweg des Fahrzeugs bewegt und dann plötzlich die Richtung wechselt, insbesondere mit Bewegungsrichtung quer zum Fahrweg des Fahrzeugs.

Gemäß einer besonders vorteilhaften Ausgestaltung umfasst die Testvorrichtung Strahlableitbleche, die zur Minimierung des Rückstrahlquerschnitts der Testvorrichtung für Radarstrahlung dienen. Die Strahlableitbleche sind dabei bevorzugt entlang des Schienensystems und/oder entlang der Stützkonstruktionen des Schienensystems angeordnet. Die Strahlableitbleche dienen dabei insbesondere zum Ableiten von Radarstrahlen eines mit Radarsensoren arbeitenden Fahrerassistenzsystems des Fahrzeugs. Die Strahlableitbleche können dabei in einem solchen Winkel zum Fahrzeug bzw. zu der voraussichtlichen Richtung, aus der die vom Fahrzeug ausgesendeten Radarstrahlen auf die Testvorrichtung auftreffenden, ausgerichtet sein, dass durch die Ableitbleche die Radarstrahlen von der Testvorrichtung und vom Fahrweg des Fahrzeugs weggelenkt werden, sowie dass die Strahlen nicht zum Fahrzeug zurückgeworfen werden und die Umgebungserfassung des Radarsensors bzw. des Fahrerassistenzsystems nicht beeinflussen. Die Strahlableitbleche können weiterhin mit einem strahlabsorbierenden Lack beschichtet sein.

Die erfindungsgemäße Testvorrichtung kann insbesondere mobil ausgebildet sein. Hierzu kann die gesamte Testvorrichtung, insbesondere die tragenden Strukturen bzw. die Stützkonstruktionen des Schienensystems, mit Rollen, Rädern oder ähnlichen Mitteln ausgebildet sein. Dadurch ist es möglich die Testvorrichtung besonders flexibel einzusetzen. Die Testvorrichtung kann insbesondere in wenigen Minuten gedreht werden, so dass Längs- und Querszenarien auf dem gleichen Testgelände durchgeführt werden können.

Die erfindungsgemäße Testvorrichtung kann weiterhin eine Auslösevorrichtung umfassen, welche die Bewegung des Testobjektes entlang den Führungsschienen des Schienensystems auslöst bzw. startet. Als Auslösevorrichtung kann beispielsweise eine Lichtschranke verwendet werden, die im Fahrweg des Fahrzeugs angeordnet ist, so dass diese vom Fahrzeug durchfahren werden kann. Hierdurch kann sichergestellt werden, beispielsweise bei einer simulierten Fahrsituation, bei der ein Fußgänger den Fahrweg des Fahrzeugs kreuzt, dass der Fußgänger zum richtigen Zeitpunkt quer zum Fahrweg des Fahrzeugs bewegt wird. Damit der Fußgänger bzw. das Testobjekt den Fahrweg des Fahrzeugs zur richtigen Zeit kreuzt bzw. damit der richtige Kontaktzeitpunkt zwischen Testobjekt und Fahrzeug erreicht wird, kann weiterhin eine bestimmte Zeitverzögerung vorgesehen sein, mit welcher die Bewegung des Testobjekts, nach Durchfahren der Lichtschranke bzw. nach Auslösung der Auslösevorrichtung, gestartet wird. Die Zeitverzögerung kann dabei in Abhängigkeit der Geschwindigkeit des Fahrzeugs gewählt werden, wobei die Geschwindigkeit des Fahrzeugs entweder konstant gehalten oder, beispielsweise beim Durchfahren der Lichtschranke bzw. der Auslösevorrichtung, gemessen werden kann. Weiterhin ist es möglich, bei einer kontinuierliche Messung der Fahrzeuggeschwindigkeit, die Bewegungsgeschwindigkeit des Testobjektes an eine sich verändernde Geschwindigkeit des Fahrzeugs anzupassen, insbesondere fortlaufend, beispielsweise durch kontinuierliche Messung der Fahrzeuggeschwindigkeit und entsprechende Ansteuerung der Antriebseinrichtung des Testobjektes in Abhängigkeit der gemessenen Geschwindigkeit. Weitere Vorteile sowie optionale Ausgestaltungen gehen aus der Beschreibung und den Zeichnungen hervor. Ausführungsbeispiele sind in den Zeichnungen vereinfacht dargestellt und in der nachfolgenden Beschreibung näher erläutert.

Es zeigt
- Figur 1:: ein Ausführungsbeispiel der erfindungsgemäßen Testvorrichtung.
- Figur 2:: die Testvorrichtung gemäß Fig. 1 aus der entgegengesetzten Blickrichtung.
- Figur 3a bis 3c:: eine bevorzugte Ausgestaltung der Aufhängung des Testobjektes.

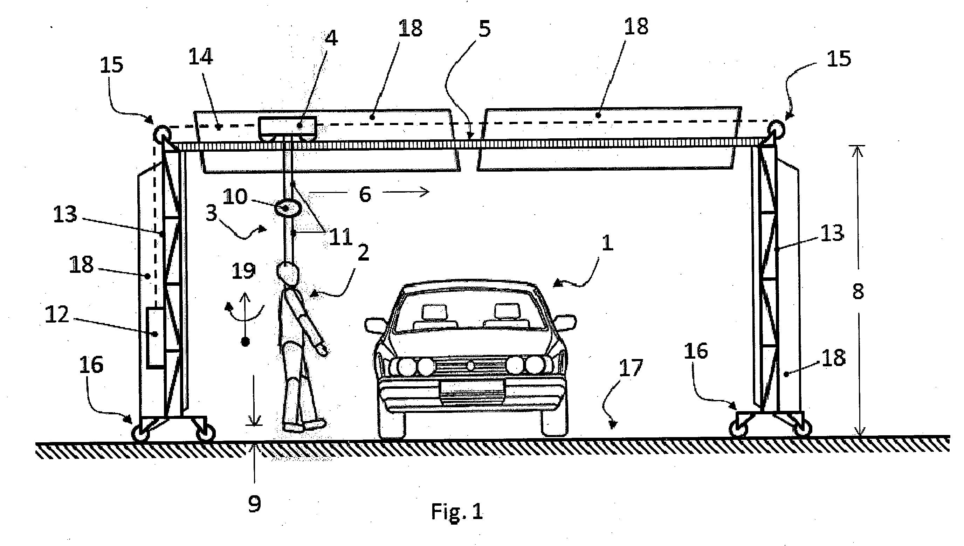

In Fig. 1 ist schematisch ein Ausgestaltungsbeispiel der erfindungsgemäßen Testvorrichtung dargestellt, die zur Simulierung von Fahrsituationen zwischen einem Fahrzeug 1 und einem Testobjekt 2 dient. Das Testobjekt 2, in diesem Fall eine Fußgängerattrappe, ist dabei mittels einer Aufhängung 3 mit einem Laufschlitten 4 verbunden, der entlang von Führungsschienen 5 eines Schienensystems mit Bewegungsrichtung 6 relativ zum Fahrweg 7 des Fahrzeugs 1 bewegbar ist. Die Führungsschienen 5 sind in einer solchen Höhe 8 positioniert, so dass die Führungsschienen 5 vom Fahrzeug 1 unterfahrbar sind. Das Testobjekt 2 ist weiterhin derart mittels der Aufhängung 3 mit dem Laufschlitten 4 verbunden, insbesondere in einer solchen Höhe 9, so dass das Testobjekt 2 vom Fahrzeug 1 anfahrbar ist.

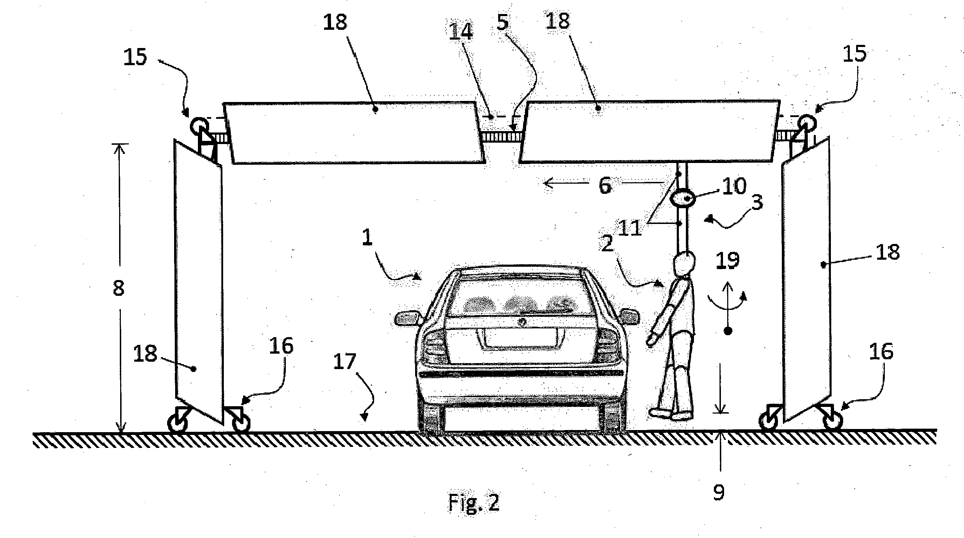

Die Aufhängung 3 für das Testobjekt 2 umfasst erfindungsgemäß ein Gelenk 10 und ist ansonsten steif ausgebildet, in diesem Fall mit zwei steifen Verbindungsstäben 11. Das Gelenk 3 ist dabei derart ausgebildet, dass das Gelenk 10 bei kollisionsfreien Fahrsituationen einen nicht ausgelenkten Zustand annimmt, beispielweise entsprechend Fig. 2a, so dass das Testobjekt 2 bis zu einer Kollision mit dem Fahrzeug 1 steif mit dem Laufschlitten 4 verbunden ist, und bei kollisionsbehafteten Fahrsituationen einen ausgelenkten Zustand annimmt, beispielsweise entsprechend Fig. 2b und Fig. 2c, so dass das Testobjekt 2 bei einer Kollision mit dem Fahrzeug 1 aus der Kollisionszone wegkippen kann.

Im dargestellten Ausgestaltungbeispiel umfasst die Testvorrichtung weiterhin einen stationären Motor 12, der beispielsweise mit einem Umschlingungsgetriebe ausgebildet ist. Der Motor ist an der Stützkonstruktion 13 des Schienensystems angebracht. Mittels des Motors 12 ist der Laufschlitten 4 über eine Seilzugvorrichtung 14 mit Umlenkrollen 15 entlang der Führungsschienen 5 des Schienensystems bewegbar.

Die Testvorrichtung aus Fig. 1 ist gemäß einer vorteilhaften Ausgestaltung der Erfindung mobil ausgestaltet. In diesem Fall sind dazu die Stützkonstruktionen 13 des Schienensystems mit Rollvorrichtungen 16 versehen. Dadurch ist es möglich die Testvorrichtung besonders flexibel einzusetzen. Die Testvorrichtung kann insbesondere in wenigen Minuten gedreht werden, so dass beispielweise Längs- und Querszenarien auf dem gleichen Testgelände bzw. Untergrund 17 durchgeführt werden können.

In Fig. 2 ist die Testvorrichtung aus Fig. 1 aus der entgegengesetzten Betrachtungsrichtung dargestellt. Fig. 2 dient dabei der Veranschaulichung der Strahlableitbleche 18, die zur Reduzierung, also möglichst weitgehenden Minimierung des Rückstrahlquerschnitts der Testvorrichtung für Radarstrahlung an den Stützkonstruktionen 13 und/oder an den Führungsschienen 5 des Schienensystems angeordnet sind. Die Strahlableitbleche 18 dienen dabei insbesondere zum Ableiten von Radarstrahlen eines mit Radarsensoren arbeitenden Fahrerassistenzsystems des Fahrzeugs 1. Die Strahlableitbleche 18 sind in diesem Fall in einem solchen Winkel zu der voraussichtlichen Richtung, aus der die vom Fahrzeug 1 ausgesendeten Radarstrahlen auf die Testvorrichtung auftreffen, ausgerichtet, dass diese die Radarstrahlen von der Testvorrichtung und vom Fahrweg des Fahrzeugs 1 weglenken, so dass die Strahlen nicht zum Fahrzeug 1 zurückgeworfen werden und die Umgebungserfassung des Fahrerassistenzsystems beeinflussen. Die Strahlableitbleche 18 können dabei weiterhin mit einem strahlabsorbierenden Lack beschichtet sein.

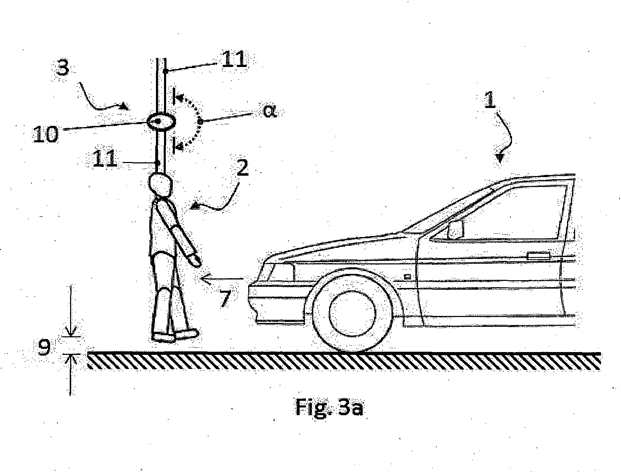

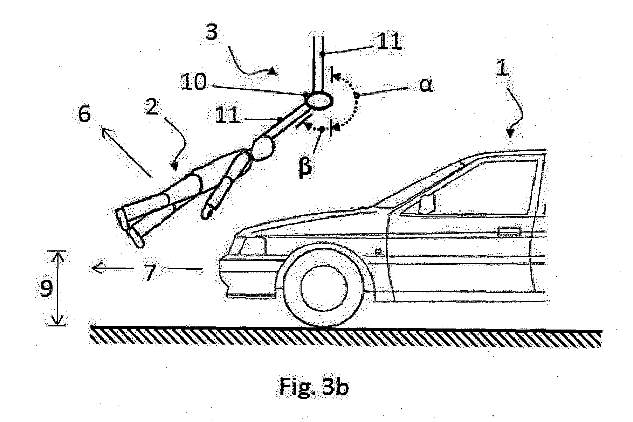

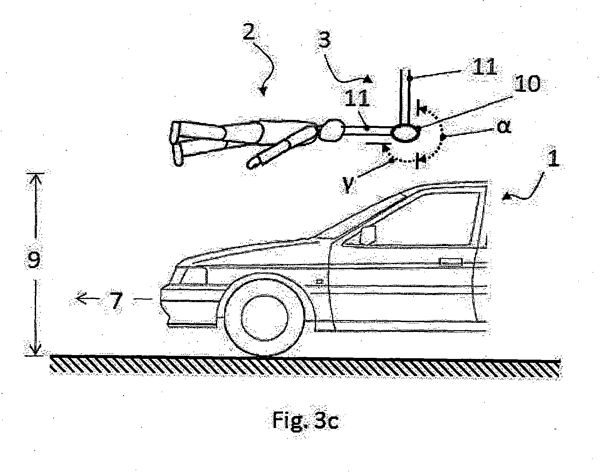

Die Figuren 3a bis 3c zeigen das Funktionsprinzip sowie bevorzugte Ausgestaltungen der Aufhängung 3 für das Testobjekt 2. Die Aufhängung 3 umfasst erfindungsgemäß ein Gelenk 10, das zwischen einem nicht ausgelenkten Zustand, insbesondere gemäß Figur 3a, und einem ausgelenkten Zustand, insbesondere gemäß den Figuren 3b und 3c, beweglich ist. Ansonsten, d.h. über das Gelenk 10 hinaus, ist die Aufhängung 3, und damit die Verbindung zwischen Testobjekt 2 und Laufschlitten 4, steif ausgebildet. In diesem Fall umfasst hierzu die Aufhängung 3 neben dem wenigstens einen Gelenk 10 mehrere steife Verbindungstreben bzw. Verbindungsstäbe 11. Bei dem nicht ausgelenkten Zustand, insbesondere gemäß Fig. 3a, handelt es sich um einen Ruhezustand des Gelenks 10, derart, dass das Testobjekt 2 in einer anfahrbaren Position bzw. Höhe 9 im Fahrweg 7 des Fahrzeug 1 hängt und dort bewegt werden kann, sowie insbesondere derart, dass das Testobjekt 2 im Wesentlichen steif über das Gelenk 10 mit dem Laufschlitten 4 verbunden ist. In diesem Fall entspricht der Ruhezustand des Gelenks 10 dem Fall, bei dem die Verbindungsstäbe 11 in einem Winkel α von 180° zueinander stehen. Das Gelenk 10 kann dabei beispielsweise allein aufgrund der Gewichtskraft des Testobjekts 2, oder zusätzlich mittels eines Arretiermechanismus, mittels eines bestimmten internen Widerstands und/oder mittels einer definierten Federkraft des Gelenks 10 im nicht ausgelenkten Zustand bzw. im Ruhezustand gehalten werden und so eine im Wesentlichen steife Verbindung zwischen Laufschlitten 4 und Testobjekt 2 schaffen. Unter der im Wesentlichen steifen Verbindung ist dabei insbesondere eine solche Ausgestaltung des Gelenks 10 zu verstehen, beispielsweise mittels internem Widerstand oder mittels geeigneter Federkraft, dass Beschleunigungen des Testobjekts 2 über den Laufschlitten 4 zu keiner Auslenkung des Gelenks 10 führen, und dass lediglich Belastung über einem bestimmten Schwellwert, wie diese beispielsweise bei einer Kollision des Testobjekts 2 mit dem Fahrzeug 1 auftreten, zu einer Auslenkung des Gelenks 10, insbesondere gemäß den Figuren 3b und 3c, führen.

Das Gelenk 10 ist erfindungsgemäß weiterhin derart ausgebildet, dass das Gelenk 10 bei kollisionsbehafteten Fahrsituationen einen ausgelenkten Zustand annimmt, insbesondere gemäß den Figuren 3b und 3c, d.h. bei einer Kollision bzw. einem Kontakt zwischen Fahrzeug 1 und Testobjekt 2 von dem nicht ausgelenkten Zustand in den ausgelenkten Zustand wechselt, insbesondere bei Überschreiten einer bestimmten Krafteinwirkung vom Fahrzeug 1 auf das Testobjekt 2. Bei dem ausgelenkten Zustand handelt es sich insbesondere um eine solche Auslenkung des Gelenks 10, beispielsweise in einem Winkel β oder γ gegenüber der Ruhestellung, so dass das Testobjekt 2 bei einer Kollision mit dem Fahrzeug 1 wegklappt bzw. wegkippt und somit aus der Kollisionszone bewegt wird, insbesondere in eine solche Höhe 9 gemäß den Figuren 3b und 3c, dass das Testobjekt 2 vom Fahrzeug 1 unterfahren werden kann.

Das Gelenk 10 ist dabei mit einem Vorspannmechanismus ausgebildet, der beispielsweise bei einem Kontakt des Testobjekts 2 mit dem Fahrzeug 1 oder allgemein bei einer bestimmten Krafteinwirkung auf das Testobjekt 2, auslöst und das Gelenk 10 von dem nicht ausgelenkten Zustand in einen definierten ausgelenkten Zustand überführt. Bei dem definierten ausgelenkten Zustand kann es sich beispielsweise um eine Auslenkung mit einem Winkel β von mindestens 45° (siehe Fig. 3b) und/oder mit einem Winkel γ von annähernd 90° (siehe Fig. 3c) gegenüber dem nicht ausgelenkten Zustand handeln, so dass das Testobjekt 2 bei einer Kollision mit dem Fahrzeug 1 automatisch mittels einer Kippbewegung aus der Kollisionszone bewegt bzw. gezogen wird.

Das Gelenk 10 ist mit einem Arretiermechanismus ausgebildet, welcher das Gelenk 10 im ausgelenkten Zustand hält. Der Arretiermechanismus ist dabei insbesondere derart ausgebildet, dass das Gelenk 10, wenn aufgrund einer kollisionsbehafteten Fahrsituation ein Wechsel vom nicht ausgelenkten (Fig. 3a) in den ausgelenkten Zustand (Fig. 3b bzw. Fig. 3c) erfolgt, im maximal erreichten oder in einem definierten ausgelenkten Zustand arretiert wird. Insbesondere dann, wenn das Gelenk 10 mit einem Vorspannmechanismus ausgebildet ist, welcher eine automatische Auslenkung bei Kollision bewirkt, kann das Gelenk 10 mittels des Arretiermechanismus in diesem auslenkten Zustand gehalten werden.

Gemäß einer vorteilhaften Ausgestaltung der erfindungsgemäßen Testvorrichtung kann die Aufhängung 3 des Testobjektes 2 zusätzlich drehbar ausgebildet sein, so dass das Testobjekt 2 um eine vertikale Achse 19 drehbar mit dem Laufschlitten verbunden ist, insbesondere um die eigene vertikale Achse 19 des Testobjektes 2 senkrecht zum Untergrund 17.

### Bezeichnungsliste

- 1: Fahrzeug
- 2: Testobjekt
- 3: Aufhängung
- 4: Laufschlitten
- 5: Führungsschiene
- 6: Bewegungsrichtung Testobjekt
- 7: Fahrweg Fahrzeug
- 8: Höhe Schienensystem über Grund
- 9: Höhe Testobjekt über Grund
- 10: Gelenk
- 11: Verbindungsstab
- 12: Motor
- 13: Stützkonstruktion
- 14: Seilzugvorrichtung
- 15: Umlenkrollen
- 16: Rollvorrichtung
- 17: Testgelände
- 18: Strahlableitblech
- 19: vertikale Achse Testobjekt
- α: 180°
- β: 45°
- γ: 90°

## Patentansprüche

1. **Testvorrichtung** zur Simulierung von Fahrsituationen zwischen einem Fahrzeug (1) und einem Testobjekt (2), insbesondere von kollisionsnahen und kollisionsbehafteten Fahrsituationen, wobei
- das Testobjekt (2) mittels einer Aufhängung (3) mit einem Laufschlitten (4) verbunden ist, der entlang von Führungsschienen (5) eines Schienensystems relativ zum Fahrweg (7) des Fahrzeugs (1) bewegbar ist,
- die Führungsschienen (5) in einer solchen Höhe (8) positioniert sind, so dass die Führungsschienen (8) vom Fahrzeug (1) unterfahrbar sind, und wobei
- das Testobjekt (2) derart mittels der Aufhängung (3) mit dem Laufschlitten (4) verbunden ist, so dass das Testobjekt (2) vom Fahrzeug (1) anfahrbar ist, wobei
- die Aufhängung (3) ein Gelenk (10) umfasst und ansonsten steif ausgebildet ist, wobei das Gelenk (10) derart ausgebildet ist, dass das Gelenk (10)
- bei kollisionsfreien Fahrsituationen einen nicht ausgelenkten Zustand annimmt, so dass das Testobjekt (2) bis zu einer Kollision mit dem Fahrzeug (1) im Wesentlichen steif mit dem Laufschlitten (4) verbunden ist, und
- bei kollisionsbehafteten Fahrsituationen einen ausgelenkten Zustand annimmt, so dass das Testobjekt (2) bei einer Kollision mit dem Fahrzeug (1) wegkippt
**dadurch gekennzeichnet, dass**
a) das Gelenk (10) mit einem Vorspannmechanismus ausgebildet ist, der bei einem Kontakt des Testobjekts (2) mit dem Fahrzeug (1) auslöst und das Gelenk (10) aus dem nicht ausgelenkten Zustand in einen definierten ausgelenkten Zustand überführt und
b) das Gelenk (10) mit einem Arretiermechanismus ausgebildet ist, welcher das Gelenk (10) im ausgelenkten Zustand hält.

2. Testvorrichtung nach Anspruch 1 **dadurch gekennzeichnet, dass** das Gelenk (10) mit einem Dämpfungsmechanismus ausgebildet ist, welcher das Gelenk (10) mit einer verlangsamten Bewegung vom ausgelenkten Zustand in den nicht ausgelenkten Zustand überführt.

3. Testvorrichtung nach einem der vorangegangenen Ansprüche, **dadurch gekennzeichnet, dass** die Aufhängung (3) weiterhin derart drehbar ausgebildet ist, so dass das Testobjekt (2) um eine vertikale Achse (19) drehbar mit dem Laufschlitten (4) verbunden ist.

4. Testvorrichtung nach einem der vorangegangenen Ansprüche, **dadurch gekennzeichnet, dass** die Testvorrichtung einen stationären Motor (12) mit Umschlingungsgetriebe umfasst, mittels dem der Laufschlitten (4) über eine Seilzugvorrichtung (14) entlang der Führungsschienen (5) des Schienensystems bewegbar ist.

5. Testvorrichtung nach Anspruch 4, **dadurch gekennzeichnet, dass** die Seilzugvorrichtung (14) mit einem Inkrementalgeber ausgebildet ist, zur Ermittlung der Position des Testobjektes (2) entlang der Führungsschienen (5).

6. Testvorrichtung nach einem der vorangegangenen Ansprüche, **dadurch gekennzeichnet, dass** das Schienensystem kurvenförmige Führungsschienen (5) umfasst, entlang derer der Laufschlitten (4) bewegbar ist.

7. Testvorrichtung nach einem der vorangegangenen Ansprüche, **dadurch gekennzeichnet, dass** die Stützkonstruktion (13) und/oder Führungsschienen (5) der Testvorrichtung Strahlableitbleche (18) zur Reduzierung des Rückstrahlquerschnitts der Testvorrichtung für Radarstrahlung aufweist.

8. Testvorrichtung nach Anspruch 7, **dadurch gekennzeichnet, dass** die Strahlableitbleche (18) mit einem strahlabsorbierenden Lack beschichtet sind.

9. Testvorrichtung nach einem der vorangegangenen Ansprüche, **dadurch gekennzeichnet, dass** die Testvorrichtung mobil ausgebildet ist.

## Claims

1. A test device for simulating driving situations between a vehicle (1) and a test object (2), in particular driving situations involving near-collisions or collisions, wherein
- the test object (2) is connected by means of a suspension (3) with a sliding carriage (4) which is movable along guide rails (5) of a rail system relative to the track (7) of the vehicle (1),
- the guide rails (5) are positioned at such a height (8) that the guide rails (8) can be rolled under by the vehicle (1), and wherein
- the test object (2) is connected by means of the suspension (3) with the sliding carriage (4), so that the test object (2) is approachable by the vehicle (1), wherein
- the suspension (3) comprises an articulation (10) and otherwise has a stiff configuration, wherein the articulation (10) is configured such that the articulation (10)
- assumes a non-deflected condition during driving situations not involving collisions, so that the test object (2) is substantially rigidly connected with the sliding carriage (4) until a collision occurs with the vehicle (1), and
- assumes a deflected condition during driving situations involving collisions, so that the test object (2) tilts away in the event of a collision with the vehicle (1),
**characterized in that**
a) the articulation (10) is configured with a pretensioning mechanism which is activated in the event of contact of the test object (2) with the vehicle (1) and moves the articulation (10) from the non-deflected condition into a specified deflected condition and
b) the articulation (10) is configured with a locking mechanism, which holds the articulation (10) in the deflected condition.

2. The test device according to Claim 1, **characterized in that** the articulation (10) is configured with a dampening mechanism which moves the articulation (10) with a decelerated movement from the deflected condition into the non-deflected condition.

3. The test device according to any one of the preceding claims, **characterized in that** the suspension (3) is furthermore configured rotatably in such a manner that the test object (2) is rotatably connected about a vertical axis (19) with the sliding carriage (4).

4. The test device according to any one of the preceding claims, **characterized in that** the test device comprises a stationary motor (12) having a continuously variable transmission, by means of which the sliding carriage (4) is movable via a cable traction device (14) along the guide rails (5) of the rail system.

5. The test device according to Claim 4, **characterized in that** the cable traction device (14) is configured with an incremental sensor (14) for determining the position of the test object (2) along the guide rails (5).

6. The test device according to any one of the preceding claims, **characterized in that** the rail system comprises curved guide rails (5), along which the sliding carriage (4) is movable.

7. The test device according to any one of the preceding claims, **characterized in that** the support structure (13) and/or guide rails (5) of the test device has beam deflector plates (18) for reducing the reflection cross-section of the test device for radar radiation.

8. The test device according to Claim 7, **characterized in that** the beam deflector plates (18) are coated with a beam-absorbing coating.

9. The test device according to any one of the preceding claims, **characterized in that** the test device is designed to be mobile.

## Revendications

1. Dispositif d'essai pour simuler des situations de conduite entre un véhicule (1) et un objet d'essai (2), en particulier de situations de conduite de quasi collision et affectées par une collision,
- l'objet d'essai (2) étant, au moyen d'un dispositif de suspension (3), raccordé à un chariot (4) qui peut être déplacé le long de rails de guidage (5) d'un système de rails par rapport à l'itinéraire (7) du véhicule (1),
- les rails de guidage (5) étant positionnés à une hauteur (8) telle que le véhicule peut rouler sous les rails de guidage (5), et
- l'objet d'essai (2) étant raccordé, au moyen du dispositif de suspension (3), au chariot (4) de telle sorte que l'objet d'essai (2) peut être heurté par le véhicule (1),
- le dispositif de suspension (3) comprenant une articulation (10) et étant pour le reste constitué de façon rigide, l'articulation (10) étant constituée de telle sorte que,
- dans des situations de conduite exemptes de collision, l'articulation (10) adopte un état non dévié de telle sorte que l'objet d'essai (2), jusqu'à une collision avec le véhicule (1), est raccordé de façon essentiellement rigide au chariot (4), et
- dans des situations de conduite affectées par une collision, adopte un état dévié de telle sorte que l'objet d'essai (2) bascule lors d'une collision avec le véhicule (1),
**caractérisé en ce que**
a) l'articulation (10) est constituée avec un mécanisme de prétension qui déclenche lors d'un contact de l'objet d'essai (2) avec le véhicule (1) et fait passer l'articulation (10) de l'état non dévié à un état dévié défini et
b) l'articulation (10) est constituée avec un mécanisme de blocage qui retient l'articulation (10) dans l'état dévié.

2. Dispositif d'essai selon la revendication 1, **caractérisé en ce que** l'articulation (10) est constituée avec un mécanisme d'amortissement qui, avec un mouvement ralenti, fait passer l'articulation (10) de l'état dévié à l'état non dévié.

3. Dispositif d'essai selon une des revendications précédentes, **caractérisé en ce que** le dispositif de suspension (3) est en outre constitué de façon rotative de telle sorte que l'objet d'essai (2) est raccordé au chariot (4) de façon rotative autour d'un axe vertical (19).

4. Dispositif d'essai selon une des revendications précédentes, **caractérisé en ce que** le dispositif d'essai comprend un moteur (12) stationnaire avec une transmission à courroie au moyen duquel le chariot (4) peut être déplacé par le biais d'un dispositif de traction à câble (14) le long des rails de guidage (5) du système de rails.

5. Dispositif d'essai selon la revendication 4, **caractérisé en ce que** le dispositif de traction à câble (14) est constitué avec un codeur incrémental pour la détermination de la position de l'objet d'essai (2) le long des rails de guidage (5).

6. Dispositif d'essai selon une des revendications précédentes, **caractérisé en ce que** le système de rails comprend des rails de guidage (5) de forme courbe le long desquels le chariot (4) peut être déplacé.

7. Dispositif d'essai selon une des revendications précédentes, **caractérisé en ce que** la construction d'appui (13) et/ou les rails de guidage (5) du dispositif d'essai présente des tôles déflectrices de faisceaux (18) pour la réduction de la section des faisceaux de retour du dispositif d'essai pour les faisceaux radar.

8. Dispositif d'essai selon la revendication 7, **caractérisé en ce que** les tôles déflectrices de faisceaux (18) sont revêtues d'une peinture absorbant les faisceaux.

9. Dispositif d'essai selon une des revendications précédentes, **caractérisé en ce que** le dispositif d'essai est constitué de façon mobile.
